# EUROPEAN PATENT SPECIFICATION

(11) **EP 3 372 450 B1**
(45) Date of publication and mention of the grant of the patent: **04.12.2019**
(21) Application number: 18160659.1
(22) Date of filing: 08.03.2018
(51) Int. Cl.: B60R 1/00, B60R 11/02, B60R 13/02

(54) **DISPLAY STRUCTURE**
ANZEIGESTRUKTUR
STRUCTURE D'AFFICHAGE

(30) Priority: 08.03.2017 FI 20175215
(43) Date of publication of application: 12.09.2018
(73) Proprietor: Inbecam Oy, 92140 Pattijoki (FI)
(72) Inventor: PITKÄLÄ, Arto, 92140 Pattijoki (FI)
(74) Representative: Kolster Oy Ab

(56) References cited:
- WO-A1-2016/103043
- US-A1- 2012 074 674
- US-A1- 2015 336 511
- US-A1- 2016 200 254

## Description

### Background of the invention

The invention relates to display structures used in blind-spot display systems of vehicles. Vehicles, such as cars, have chassis structures of the vehicle, which prevent a driver from seeing all of the area in the direction to which the vehicle is moving. A specific problem is the blind-spot area created by A pillars supporting the roof of the vehicle at the front of the cabin.

Blind-spot display systems for vehicles and the display structures used in them are known per se, with some of the known solutions being disclosed in publications JP200464131 and US8345095, for example.

A problem with the arrangement described above is the non-optimum relationship between the display structure and its installation environment and a non-optimum integration. The issues referred to lessen the ability of the display structure to achieve the desired results in a manner where the structure would still be simple, shallow-dimensional in the depth direction, and well-adapting to the environment of use. Documents US2016/0200254 and US2012/0746674 disclose display structures according to the preamble of claim 1, associated with airbag of the vehicle.

### Brief description of the invention

An object of the invention is thus to develop a new type of display structure for a blind-spot display system so as to enable the aforementioned problems to be solved. The object of the invention is achieved by a display system which is characterized by what is disclosed in the independent claim. Preferred embodiments of the invention are disclosed in the dependent claims.

The invention is based on a new kind of support, positioning, and structure of a display film.

The advantage of the display structure of the invention is its good applicability to the installation environment, shallowness in the depth direction, and effective and diverse ability to eliminate blind-spots.

### Brief description of the figures

The invention will now be described in more detail in connection with preferred embodiments and with reference to the accompanying drawings, in which:
Figure 1 shows a horizontal cross-section of a location in the longitudinal direction of a vehicle, where the A pillar meets an edge of the windscreen and, from another edge of the A pillar, the front edge of the right-hand side front door.
Figure 2 is a view from the inside of the cabin of the inventive display structure in connection with an A pillar of a vehicle, on top of a cover plate.

### Detailed description of the invention

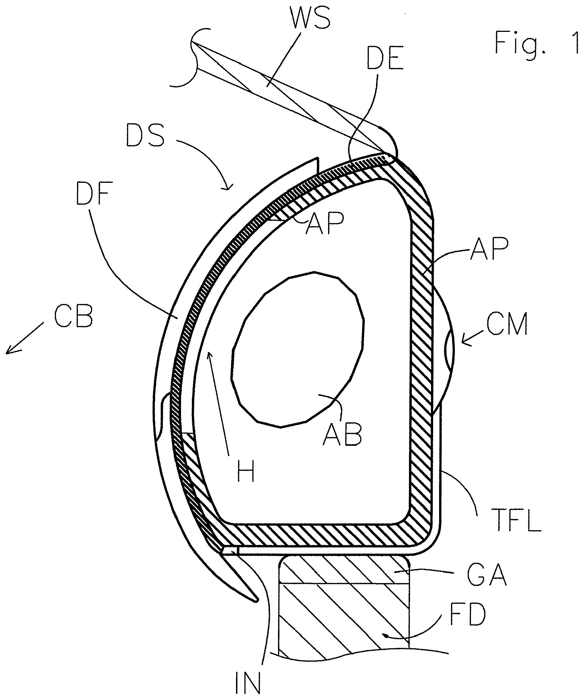

With reference to the drawings, the application environment is a vehicle cabin CB, in particular the area of the dashboard extremity in the area between the windscreen WS and the front edge of a front door FD, where the roof of the vehicle is supported by the A pillar AP as the topmost part of the vehicle chassis. The vehicle may be a car, for example. Figure 1 is a horizontal cross-section of the right edge of the windscreen WS and the front edge of the right front door FD meeting the A pillar AP. At the front edge of the front door there is a seal GA.

This relates to a display structure DS for a blind-spot display system for a vehicle. The display structure DS and camera means CM feeding image data, or image information, such as video image, are needed because a structural part AP of a vehicle, such as the A pillar, leaves a blind spot behind it as seen from the driver's view, so to the foreground of the vehicle, which means that a sector in the area at the foreground of the vehicle will not be seen by the driver's eyes. As the vehicle is moving, the target of this blind-spot sector is naturally changing all the time.

The display structure DS is arranged to be installed in connection with the structural element AP of the vehicle, such as the A pillar. The display structure DS comprises a flexible display film DF which is the actual display element of the display structure, so in a way the viewing screen.

The display structure DS comprises an input interface IN for the camera means CM, to receive and display image data on the display structure DS of the blind-spot area that the structural element AP of the vehicle blocks. As regards the input IN, it may be noted that the camera means CM may be connected to it directly or indirectly. An indirect connection refers to the presence of a data processing unit, such as a microprocessor unit, between the camera CM and the input interface IN on the display structure DS, which may process the image data from the camera CM before feeding it to the input interface IN of the display structure DF.

It is seen in the figure, in particular Figure 1, that there is an Airbag element AB in connection with the A pillar, which has been installed inside the A pillar AP through a pillar hole H. This hole H in the A pillar is covered by a cover plate DE.

In an embodiment, it is the case that the input interface IN for directly or indirectly connecting the camera means is connected to the display film DF comprised by the display structure DS by a thin-film conductor TFL, which, as the name implies, is a flat and narrow film. The embodiment improves the chance for a shallow-dimension structure.

The display structure DS is so implemented that the flexible display film DF comprised by the display structure is installed on top of the cover plate DE of the installation hole H of the Airbag in the A pillar AP, whereby the cover plate DE thus forms a support surface for the display film DF of the display structure DS. So, the cover plate DE is the cover plate of the installation location of the Airbag element AB comprised by a structural element of the vehicle, such as the A pillar AP. Naturally, the cover plate DE may be, and in practise is, broader than the scope of the Airbag installation hole H of the A pillar AP is, and the display film DF supported by the cover element DE may extend over the edges LE, RE of the cover plate DE.

The fact is that in an embodiment the display film DF comprised by the display structure DS on top of the cover plate DE as the support surface of the display film DF is shaped according to the exterior face of the cover plate DE. In addition, in an embodiment the display film DF comprised by the display structure DS at least mostly covers the entire exterior face of said cover plate. In such a case, the display film DF both merges well into its surroundings and is capable of effectively eliminating blind-spot areas.

Referring to Figure 1, in particular, to further improve the display structure DS, in an embodiment the display film DF comprised by the display structure DS exceeds the width of the cover plate DE acting as its support surface on at least one edge LE, RE of the cover plate DE. What this achieves is that in addition to showing the blind-spot area blocked by the A pillar AP, the display film DF may, on its edge areas DFL, DFR, show the blind-spot areas that are left in blind-spots of structural elements adjacent to the A pillar (these, too, are structural elements of the vehicle, such as a seal, door frame).

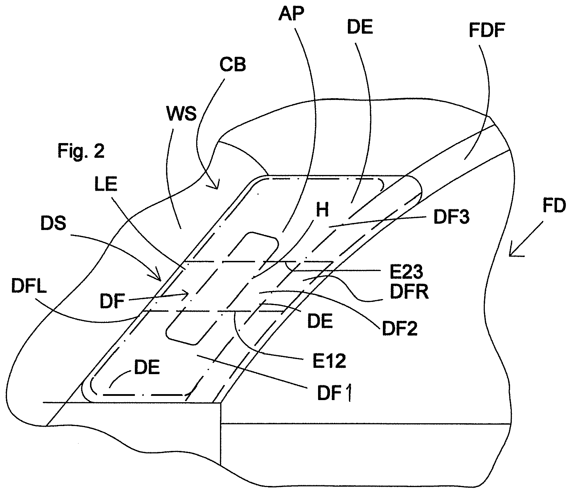

It is advantageous that the display structure is such that the display film DF comprised by the display structure DS exceeds the width of the cover plate DE acting as its support surface on at least two, and in the example of Figure 2, specifically on two, edges of the cover plate. In such a case, the left edge area DFL or the display film covers the vertical seal between the windscreen WS and the A pillar AP, and the right edge area DFR of the display film DF covers the front edge and seal of the door frame FDF of the front door FD abutting the A pillar AP. This way, substantially the entire blind-spot area may be removed and replaced with the display film of the display structure DS. The display film DF thus extends from the edge of the windscreen WS all the way to the front edge of the side window of the front door.

The display structure is such than in an embodiment the display film DF comprised by the display structure exceeds the cover plate DE acting as its support surface on two edges LE, RE of the cover plate, the edges being edges LE, RE that mainly point towards mutually opposite directions, out of which the edge LE is the left edge of the cover plate and the edge RE is the right edge of the cover plate DE.

In Figure 2, the horizontal dotted lines E12, E23 refer to the fact that the display film DF may be a multi-element one, so the meeting lines E12, E23 are at any one time always between two display film elements DF1, DF2 and correspondingly DF2, DF3. The meeting lines E12, E23 act as break lines when the fastening of the plate DE to the pillar AP is strong that instead of the plate (and the display film it supports) detaching, the Airbag AB splits the plate DE and due to the break lines also the display film DF with ease. It is a good idea to have a dedicated camera for each display film element E1-E3.

In an embodiment, the display film DF comprises at least two display film elements DF1-DF3 and, between them, one or more meeting lines E12, E23 at which adjacent display film elements are at least partly overlapping. The overlap may best be seen in Figure 1 between the upper and lower element of the display film DF. The overlap may be used by means of adjusting the length of overlap to change the size of the display film in different installation locations, for example.

In an embodiment the display film DF comprised by the display structure DS on top of the support surface or cover plate DE of the display film is an OLED film or a hybrid film. One of the manufacturers of OLED films is LG, for example. The OLED film (Organic light emitting diode) is a thin and flexible display type that even in bright conditions has a good contrast and consequently a good display capability. The flexible OLED film is a light surface implemented on polyamide or another plastic material. An OLED film may be manufactured by gravure or silk-screen printing technology to one where the thickness of the OLED light surface is 0.20 mm, for example. An OLED film has electrodes and polymer layer with the thickness of a few hundred nanometres (nm). An OLED film illuminates on its entire surface, differing from the conventional spot-like LED lighting. A hybrid film has features from both an OLED film and the more traditional, silicon or another semiconductor based conventional LED structure.

## Claims

1. A display structure for a blind-spot display system of a vehicle, the display structure (DS) being arranged to be installed in connection with a structural element (AP), such as the A pillar, of a vehicle, the display structure comprising an input interface (IN) for camera means (CM), to receive and display image data of the blind-spot area that the structural element (AP) of the vehicle blocks, and wherein
the flexible display film (DF) comprised by the display structure is installed on top of a cover plate (DE), whereby the cover plate (DE) thus forms a support surface for the display film (DF) of the display structure, and which cover plate is the cover plate (DE) of an installation location of an airbag element (AB) comprised by the structural element (AP), such as the A pillar, of the vehicle, and wherein the display film (DF) comprises at least two display film elements (DF1-DF3) and, between them, one or more meeting lines (E12, E23) for a break line (E12, E23) to facilitate the opening of the airbag element (AB), **characterised in that** at the meeting lines (E12, E23) the adjacent display film elements (DF1-DF3) are at least partly overlapping.

2. A display structure as claimed in claim 1, **characterised in that** the display film (DF) comprised by the display structure on top of the cover plate (DE) as the support surface of the display film DF is shaped according to the exterior face of the cover plate (DE).

3. A display structure as claimed in claim 1 or 2, **characterised in that** he display film (DF) comprised by the display structure at least mostly covers the entire exterior face of said cover plate (DE).

4. A display structure as claimed in claim 1-3, **characterised in that** the display film (DF) comprised by the display structure exceeds the width of the cover plate (DE) acting as its support surface on at least one edge of the cover plate.

5. A display structure as claimed in claim 4, **characterised in that** the display film (DF) comprised by the display structure exceeds the width of the cover plate (DE) acting as its support surface on at least two edges of the cover plate (DE).

6. A display structure as claimed in claim 4 or 5, **characterised in that** the display film (DF) comprised by the display structure exceeds the cover plate (DE) acting as its support surface on two edges (LE, RE) of the cover plate, the edges being edges that mainly point towards mutually opposite directions.

7. A display structure as claimed in any one of the preceding claims, **characterised in that** the display film (DF) comprised by the display structure is an OLED film or a hybrid film.

8. A display structure as claimed in claim 1, **characterised in that** the input interface (IN) is connected to the display film (DF) comprised by the display structure by a thin-film conductor (TFL).

9. A display structure as claimed in claim 1, **characterised in that** the display film (DF) is fixedly integrated into the surface of the cover plate (DE) acting as its support surface.

## Patentansprüche

1. Anzeigestruktur für ein Totwinkelanzeigesystem eines Fahrzeugs, wobei die Anzeigestruktur (DS) angeordnet ist, um in Verbindung mit einem Strukturelement (AP), wie etwa der A-Säule, eines Fahrzeugs installiert zu werden, wobei die Anzeigestruktur eine Eingabeschnittstelle (IN) für ein Kameramittel (CM) umfasst, um Bilddaten des Totwinkelbereichs, der vom Strukturelement (AP) des Fahrzeugs blockiert wird, zu empfangen und anzuzeigen, und wobei
die flexible Anzeigefolie (DF), die in der Anzeigestruktur umfasst ist, auf einer Abdeckplatte (DE) installiert ist, wodurch die Abdeckplatte (DE) so eine Stützfläche für die Anzeigefolie (DF) der Anzeigestruktur bildet, und wobei die Abdeckplatte die Abdeckplatte (DE) eines Installationsortes eines Airbagelements (AB) ist, das im Strukturelement (AP), wie etwa der A-Säule, des Fahrzeugs umfasst ist, und wobei die Anzeigefolie (DF) mindestens zwei Anzeigefolienelemente (DF1-DF3) umfasst und zwischen diesen eine oder mehrere Kontaktlinien (E12, E23) für eine Bruchlinie (E12, E23), um das Öffnen des Airbagelements (AB) zu erleichtern, **dadurch gekennzeichnet, dass** sich die benachbarten Anzeigefolienelemente (DF1-DF3) an den Kontaktlinien (E12, E23) mindestens teilweise überlappen.

2. Anzeigestruktur nach Anspruch 1, **dadurch gekennzeichnet, dass** die Anzeigefolie (DF), die in der Anzeigestruktur auf der Abdeckplatte (DE) als der Stützfläche der Anzeigefolie DF umfasst ist, gemäß der Außenseite der Abdeckplatte (DE) geformt ist.

3. Anzeigestruktur nach Anspruch 1 oder 2, **dadurch gekennzeichnet, dass** die Anzeigefolie (DF), die in der Anzeigestruktur umfasst ist, die gesamte Außenseite der Abdeckplatte (DE) mindestens überwiegend abdeckt.

4. Anzeigestruktur nach Anspruch 1 bis 3, **dadurch gekennzeichnet, dass** die Anzeigefolie (DF), die in der Anzeigestruktur umfasst ist, die Breite der Abdeckplatte (DE), die als deren Stützfläche fungiert, an mindestens einer Kante der Abdeckplatte überragt.

5. Anzeigestruktur nach Anspruch 4, **dadurch gekennzeichnet, dass** die Anzeigefolie (DF), die in der Anzeigestruktur umfasst ist, die Breite der Abdeckplatte (DE), die als deren Stützfläche fungiert, an mindestens zwei Kanten der Abdeckplatte (DE) überragt.

6. Anzeigestruktur nach Anspruch 4 oder 5, **dadurch gekennzeichnet, dass** die Anzeigefolie (DF), die in der Anzeigestruktur umfasst ist, die Abdeckplatte (DE), die als deren Stützfläche fungiert, an zwei Kanten (LE, RE) der Abdeckplatte überragt, wobei die Kanten Kanten sind, die hauptsächlich in gegenseitig gegenüberliegende Richtungen zeigen.

7. Anzeigestruktur nach einem der vorhergehenden Ansprüche, **dadurch gekennzeichnet, dass** die Anzeigefolie (DF) die in der Anzeigestruktur umfasst ist, eine OLED-Folie oder eine Hybridfolie ist.

8. Anzeigestruktur nach Anspruch 1, **dadurch gekennzeichnet, dass** die Eingabeschnittstelle (IN) mit der Anzeigefolie (DF), die in der Anzeigestruktur umfasst ist, über einen Dünnfilmleiter (TFL) verbunden ist.

9. Anzeigestruktur nach Anspruch 1, **dadurch gekennzeichnet, dass** die Anzeigefolie (DF) in die Fläche der Abdeckplatte (DE), die als ihre Stützfläche fungiert, fixiert integriert ist.

## Revendications

1. Structure d'affichage pour un système d'affichage d'angle mort d'un véhicule, la structure d'affichage (DS) étant conçue pour être installée en liaison avec un élément structurel (AP), tel que le montant avant, d'un véhicule, la structure d'affichage comprenant une interface d'entrée (IN) pour des moyens de caméra (CM), pour recevoir et afficher des données d'image de la zone d'angle mort que l'élément structural (AP) du véhicule bloque, et dans laquelle
le film d'affichage souple (DF) compris dans la structure d'affichage est installé sur le dessus d'une plaque de recouvrement (DE), moyennant quoi la plaque de recouvrement (DE) forme ainsi une surface de support pour le film d'affichage (DF) de la structure d'affichage, et laquelle plaque de recouvrement est la plaque de recouvrement (DE) d'un emplacement d'installation d'un élément de coussin gonflable (AB) compris dans l'élément structurel (AP) du véhicule, tel que le montant avant, et dans lequel le film d'affichage (DF) comprend au moins deux éléments de film d'affichage (DF1 à DF3) et, entre eux, une ou plusieurs lignes de rencontre (E12, E23) pour une ligne de rupture (E12, E23) pour faciliter l'ouverture de l'élément de coussin gonflable (AB), **caractérisée en ce qu'**au niveau des lignes de rencontre (E12, E23) les éléments de film d'affichage adjacents (DF1 à DF3) se chevauchent au moins partiellement.

2. Structure d'affichage selon la revendication 1, **caractérisée en ce que** le film d'affichage (DF) compris dans la structure d'affichage sur le dessus de la plaque de recouvrement (DE) en tant que surface de support du film d'affichage DF est mis en forme d'après la face extérieure de la plaque de recouvrement (DE).

3. Structure d'affichage selon la revendication 1 ou 2, **caractérisée en ce que** le film d'affichage (DF) compris dans la structure d'affichage recouvre au moins majoritairement la totalité de la face extérieure de ladite plaque de recouvrement (DE).

4. Structure d'affichage selon la revendication 1 à 3, **caractérisée en ce que** le film d'affichage (DF) compris dans la structure d'affichage dépasse la largeur de la plaque de recouvrement (DE) agissant en tant que sa surface de support sur au moins un bord de la plaque de recouvrement.

5. Structure d'affichage selon la revendication 4, **caractérisée en ce que** le film d'affichage (DF) compris dans la structure d'affichage dépasse la largeur de la plaque de recouvrement (DE) agissant en tant que sa surface de support sur au moins deux bords de la plaque de recouvrement (DE).

6. Structure d'affichage selon la revendication 4 ou 5, **caractérisée en ce que** le film d'affichage (DF) compris dans la structure d'affichage dépasse la plaque de recouvrement (DE) agissant en tant que sa surface de support sur deux bords (LE, RE) de la plaque de recouvrement, les bords étant des bords qui pointent principalement dans des directions mutuellement opposées.

7. Structure d'affichage selon l'une quelconque des revendications précédentes, **caractérisée en ce que** le film d'affichage (DF) compris dans la structure d'affichage est un film à diodes électroluminescentes organiques, OLED, ou un film hybride.

8. Structure d'affichage selon la revendication 1, **caractérisée en ce que** l'interface d'entrée (IN) est connectée au film d'affichage (DF) compris dans la structure d'affichage par un conducteur en couches minces (TFL).

9. Structure d'affichage selon la revendication 1, **caractérisée en ce que** le film d'affichage (DF) est intégré de manière fixe dans la surface de la plaque de recouvrement (DE) agissant en tant que sa surface de support.
